# EUROPÄISCHE PATENTSCHRIFT

(11) **EP 1 527 287 B1**
(45) Veröffentlichungstag und Bekanntmachung des Hinweises auf die Patenterteilung: **21.01.2009**
(21) Anmeldenummer: 03787308.0
(22) Anmeldetag: 10.03.2003
(51) Int. Cl.: F16D 1/068, F16D 1/06, F16H 57/02

(54) **Verfahren zur Herstellung einer Welle-Nabev-Verbindung**
Method of manufacturing a shaft-hub connection
Procédé de fabrication d'une liaison arbre-moyeu

(30) Priorität: 30.07.2002 DE 10234607
(43) Veröffentlichungstag der Anmeldung: 04.05.2005
(73) Patentinhaber: ROBERT BOSCH GMBH, 70442 Stuttgart (DE)
(72) Erfinder: MOENCH, Jochen, 76547 Sinzheim (DE); LIEDEL, Markus, 91257 Pegnitz (DE)
(86) Internationale Anmeldenummer: PCT/DE2003/000751
(87) Internationale Veröffentlichungsnummer: WO 2004/016962

(56) Entgegenhaltungen:
- EP-A- 0 725 232
- GB-A- 1 200 810
- US-A- 5 052 842
- PATENT ABSTRACTS OF JAPAN Bd. 0070, Nr. 01 (M-183), 6. Januar 1983 (1983-01-06) & JP 57 161363 A (TOYO UNPANKI KK), 4. Oktober 1982 (1982-10-04)

## Beschreibung

### Stand der Technik

Die vorliegende Erfindung betrifft ein Verfahren zur Herstellung eine Welle-Nabe-Verbindung für eine aus Metall hergestellte Welle und ein aus Kunststoff hergestelltes Nabenbauteil, insbesondere für Planetengetriebe, sowie ein Verfahren zur Montage für ein Planetengetriebe.

Sogenannte Welle-Nabe-Verbindungen sind als Verbindungen zwischen einer Welle und einem Nabenbauteil ein klassisches Maschinenelement. Bekannte Welle-Nabe-Verbindungen sind beispielsweise eine formschlüssige Verbindung, eine reibschlüssige Verbindung oder auch eine stoffschlüssige Verbindung. Formschlüssige Welle-Nabe-Verbindungen werden verwendet, wenn eine Lösbarkeit der Nabe von der Welle notwendig ist oder wenn die geforderten zu übertragenen Drehmomente mit einer reibschlüssigen Welle-Nabe-Verbindung nicht übertragen werden können. Übliche formschlüssige Welle-Nabe-Verbindungen sind beispielsweise Passfedern oder Profilwellen mit Keilverzahnung. Derartige Welle-Nabe-Verbindungen haben jedoch den Nachteil, dass bei ihrem Zusammenbau auf Grund der formschlüssigen Verbindung immer vorbestimmte Stellungen bzw. Winkel zwischen der Welle und der Nabe festgelegt sind. Diesen Nachteil haben reibschlüssige oder stoffschlüssige Welle-Nabe-Verbindungen nicht. Allerdings müssen bei stoffschlüssigen Verbindungen gleiche oder wenigstens ähnliche Werkstoffe für die Welle und die Nabe vorgesehen werden. Reibschlüssige Verbindungen haben jedoch das Problem eines relativ geringen, übertragbaren Drehmoment.

Somit können insbesondere bei Planetengetrieben, und hierbei insbesondere bei Planetengetrieben mit doppelten Planetenradsätzen, Probleme auftreten, da die Planetengetriebe ein hohes Drehmoment übertragen sollen, was nur mit einer formschlüssigen Verbindung zwischen einer Welle und einem Planetenrad (Nabenbauteil) möglich ist. Aus Steifigkeitsgründen muss die Welle aus Metall sein, während die Planetenräder auf Grund geringerer Geräuschentwicklung vorzugsweise aus Kunststoff sind. Hierbei muss jedoch ein Spiel zwischen den einzelnen Zahnrädern des Planetengetriebes minimal sein. Dadurch ergeben sich für die formschlüssigen Welle-Nabe-Verbindungen minimale Toleranzen. Weiterhin müssen insbesondere bei Planetengetrieben mit doppelten Planetenradsätzen eine Vielzahl von Planetenrädern bereitgehalten werden, um die jeweiligen Winkelstellungen zwischen den einzelnen Planetenrädern und den Wellen der Planetenräder bei formschlüssigen-Verbindungen sicherstellen zu können. Dadurch ergeben sich erhöhte Herstellungs- und Lagerkosten.

Mit der US 5,052,842 ist eine Vorrichtung bekannt geworden, bei der ein Abtriebselement mechanisch auf einer Abtriebswelle gesichert wird. Dabei weist das Abtriebselement einen Manschette auf, die die Abtriebswelle umfasst und mittels einer Schraube das Abtriebselement drehfest auf der Abtriebswelle fixiert.

### Vorteile der Erfindung

Das erfindungsgemäße Verfahren, zur Herstellung einer Wellen-Naben-Verbindung sowie eines Planetengetriebes, beinhaltend eine solche, verwendet eine Wette aus Metall und weist ein Nabenbauteil aus Kunststoff auf. Weiterhin umfasst die nach dem erfindungsgemäßen Verfahren hergestellten Welle-Nabe-Verbindung ein Zwischenbauteil, welches zwischen der Welle und dem Nabenbauteil angeordnet ist, um die Welle mit dem Nabenbauteil zu verbinden. Dabei ist das Zwischenbauteil mit der Welle formschlüssig verbunden. Mit dem Nabenbauteil ist das Zwischenbauteil unlösbar verbunden. Hierbei wird die unlösbare Verbindung zwischen dem Nabenbauteil und dem Zwischenbauteil erst dann erzeugt, wenn das Zwischenbauteil mit der Welle formschlüssig verbunden ist. Dadurch ist es erfindungsgemäß möglich, dass vor der Verbindung des Nabenbauteils mit dem Zwischenbauteil das Nabenbauteil in einem beliebigen Winkel zur Welle ausgerichtet werden kann und erst anschließend die Verbindung zwischen dem Nabenbauteil und dem Zwischenbauteil erfolgt. Dadurch muss nicht mehr eine Vielzahl unterschiedlicher Nabenbauteile bereitgehalten werden, sondern das Nabenbauteil kann in einem beliebigen Winkel zur Welle befestigt werden. Es sei angemerkt, dass erfindungsgemäß unter dem Begriff "Nabenbauteil" unterschiedliche Bauteile wie beispielsweise ein Nabenflansch, Zahnräder o.ä. verstanden wird.

Vorzugsweise ist das Zwischenbauteil aus Metall oder aus Kunststoff hergestellt. Hierbei ist Metall besonders bevorzugt, da dadurch über die formschlüssige Verbindung zwischen dem Zwischenbauteil und der Welle ein hohes Drehmoment übertragbar ist. Vorzugsweise ist das Zwischenbauteil mit dem Nabenbauteil mittels eines Schweißverfahrens unlösbar verbunden. Besonders bevorzugt wird dabei ein Ultraschallschweißverfahren verwendet. Wenn beispielsweise das Zwischenbauteil aus Metall ist, kann dadurch eine sehr gute unlösbare Verbindung zwischen dem Zwischenbauteil und dem Nabenbauteil bereitgestellt werden. Für eine besonders sichere Verbindung der beiden Teile können hierbei vorstehende oder vorkragende Teile am Zwischenbauteil vorgesehen werden. Somit können hohe Drehmomente übertragen werden.

Vorzugsweise wird die Welle-Nabe-Verbindung in einem Planetengetriebe mit einem doppelten Planetenradsatz verwendet. Hierzu weist die Welle einen ersten Verbindungsbereich auf, an dem ein erstes Planetenrad formschlüssig mit der Welle verbunden ist. Weiterhin weist die Welle einen zweiten Verbindungsbereich auf, an welchem das Zwischenbauteil formschlüssig mit der Welle verbunden ist. Am Zwischenbauteil wird dann das zweite Planetenrad unlösbar mit dem Zwischenbauteil verbunden. Dadurch wird erfindungsgemäß erreicht, dass beide Planetenräder formschlüssig, eines mittelbar über das Zwischenbauteil und das andere unmittelbar mit der Welle verbunden sind. Dadurch können hohe Drehmomente über das Planetengetriebe übertragen werden. Da das zweite Planetenrad mit dem Zwischenbauteil verbunden wird, ist es möglich, dass das Planetengetriebe schon zusammengesteckt wird und erst im zusammengesteckten Zustand das zweite Planetenrad mit dem Zwischenbauteil unlösbar verbunden wird. Dadurch kann ein beliebiger Winkel zwischen dem zweiten Planetenrad und der Welle ausgerichtet werden, sodass keine unterschiedlichen Planetenräder notwendig sind.

Besonders vorteilhaft weist die Welle in dem Bereich, in welchem das verschweißte Planetenrad angeordnet ist, eine rauhe Oberfläche, insbesondere eine gerändelte Oberfläche auf. Dadurch lassen sich beim Aufschweißen des Planetenrads auf die Welle zusätzliche Effekte nutzen, da zwischen der aufgerauhten Welle und dem Planetenrad ebenfalls noch eine kraftschlüssige Verbindung hergestellt werden kann. Beispielsweise kann hierbei eine Abrutschsicherung gewährleistet werden, wodurch eine Steigerung eines übertragbaren Drehmoments zwischen der Welle und dem Planetenrad möglich ist. Hierbei kann zwischen dem Planetenrad und der Wellenoberfläche eine Passung, insbesondere eine Übergangspassung, ausgebildet sein. Dies kann bei einem doppelten Planetenradsatz selbstverständlich auch für die Verbindung zwischen dem anderen Planetenrad und der Welle vorgesehen werden.

Besonders bevorzugt ist das Zwischenbauteil als eine mit Zapfen versehene Mitnehmerscheibe ausgebildet. Dabei kann das Zwischenbauteil an den Zapfen mit dem Nabenbauteil verschweißt werden. Hierbei können die Zapfen der Mitnehmerscheibe innerhalb oder außerhalb eines an dem Nabenbauteil vorgesehenen Flansches positioniert werden. Je nach dem, an welcher Seite des Flansches die Zapfen des Zwischenbauteils positioniert sind, kann Material beim Schweißen nach außen bzw. innen austreten.

Vorzugsweise ist der Formschluss zwischen dem Zwischenbauteil und der Welle als ein Vieleck und insbesondere als ein Sechseck ausgebildet. Es ist jedoch auch möglich, dass als Formschluss zwischen der Welle und dem Zwischenbauteil eine Keilverzahnung, Passfedern o.ä. verwendet werden.

Das erfindungsgemäße Verfahren zur Montage eines Planetengetriebes umfasst die Schritte des formschlüssigen Verbindens des Zwischenbauteils mit der Welle des Planetenradsatzes. Anschließend wird ein Planetenrad auf die Welle an die Seite des schon angeordneten Zwischenbauteils aufgesteckt und das Planetenrad mit den anderen Bauteilen des Planetengetriebes, insbesondere dem Hohlrad und dem Sonnenrad, ausgerichtet. Dadurch kann ein beliebiger Winkel zwischen dem Planetenrad und der Welle erreicht werden. Anschließend erfolgt ein unlösbares Verbinden, insbesondere mittels Verschweißen, des Zwischenbauteils mit dem ausgerichteten Planetenrad, sodass eine unlösbare Verbindung zwischen diesen beiden Bauteilen erzeugt wird. Somit ist das Planetenrad formschlüssig über das Zwischenbauteil mit der Welle verbunden. Besonders bevorzugt wird das erfindungsgemäße Verfahren zur Montage eines Planetengetriebes mit einem oder mehreren doppelten Planetenradsätzen verwendet. Dabei kann ein erstes Planetenrad formschlüssig auf die Welle gesteckt werden und ein zweites Planetenrad wird, wie oben beschrieben, mit dem Zwischenbauteil unlösbar verbunden. Da die unlösbare Verbindung erst nach dem Zusammenbau des Planetengetriebes erfolgt, können für das erste Planetenrad und das zweite Planetenrad die gleichen Planetenräder verwendet werden, sodass die Bauteilezahl gering ist.

Vorzugsweise wird das unlösbare Verschweißen des Zwischenbauteils mit dem Planetenrad mittels eines Ultraschall-Schweißverfahrens ausgeführt. Weiterhin bevorzugt sind am Zwischenbauteil mehrere vorstehende Elemente, wie z. B. Zapfen, ausgebildet, welche nach dem Schweißen im Planetenrad eingeschweißt sind, um die unlösbare Verbindung zwischen dem Zwischenbauteil und dem Planetenrad sicherzustellen. Besteht das Zwischenbauteil aus Metall und das Nebenbauteil aus Kunststoff, entsteht durch das wegfließende Material beim Schweißen eine formschlüssige Verbindung zwischen Neben- und Zwischenbauteil.

Weiterhin ist es bevorzugter Weise auch noch möglich, dass das mit dem Zwischenbauteil verschweißte Planetenrad mit der Welle an seinem inneren Umfang zusätzlich verschweißt wird.

Nachfolgend wird die vorliegende Erfindung anhand von bevorzugten Ausführungsbeispielen in Verbindung mit der Zeichnung beschrieben. In der Zeichnung ist:
- Figur 1: eine schematische, perspektivische Ansicht einer Welle für einen Planetenradsatz eines Planetengetriebes mit doppeltem Planetenradsatz,
- Figur 2: eine perspektivische Darstellung der Welle mit aufgestecktem Zwischenbauteil,
- Figur 3: eine perspektivische Ansicht des in Figur 2 gezeigten Zwischenbauteils,
- Figur 4: eine schematische, vereinfachte Darstellung eines Planetenrades mit unlösbar daran angeschweißtem Zwischenbauteil,
- Figur 5: eine schematische Darstellung eines Planetengetriebes, in welchem der erfindungsgemäße Planetenradsatz verwendet wird,
- Figur 6: eine Schnittansicht eines Planetenrades und eines Zwischenbauteils im ummontierten Zustand gemäß einem zweiten Ausführungsbeispiel der vorliegenden Erfindung, und
- Figur 7: eine Schnittansicht des Planetenrades und des Zwischenbauteils von Figur 6 im montierten Zustand.

### Beschreibung der Ausführungsbeispiele

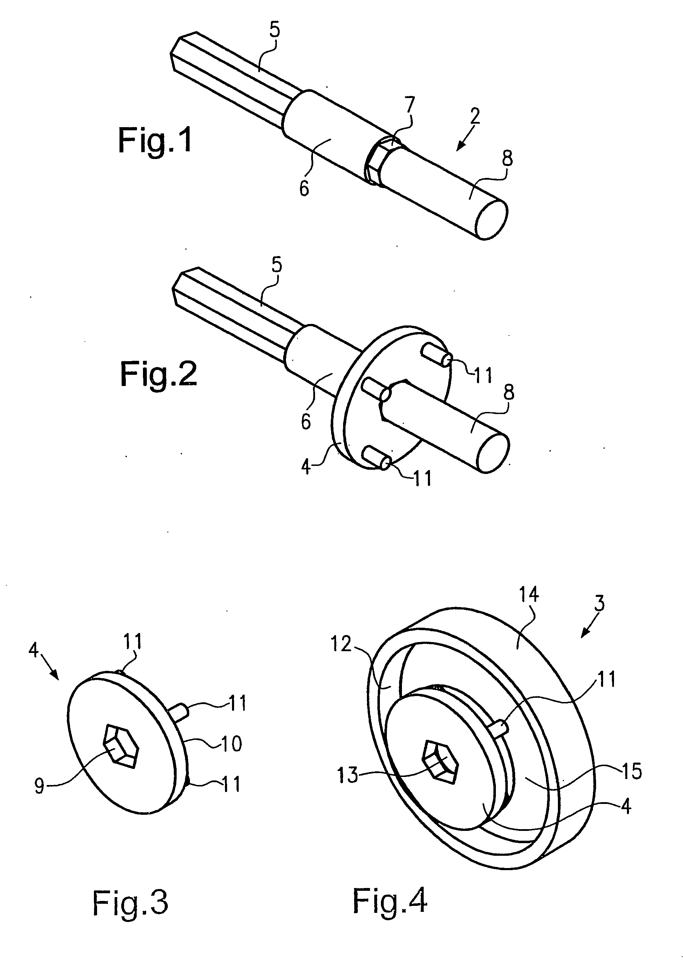

Nachfolgend wird unter Bezugnahme auf die Figuren 1 bis 5 ein erstes Ausführungsbeispiel der vorliegenden Erfindung beschrieben.

Die nach dem erfindungsgemäßen Verfahren hergestellten Welle-Nabe-Verbindung 1 umfasst eine Welle 2, ein Nabenbauteil 3 sowie ein zwischenbauteil 4. Die Welle 2 ist eine Welle für einen doppelten Planetenradsatz in einem Planetengetriebe. Die Welle 2 weist einen ersten Bereich 5 für einen Formschluss mit einem ersten Planetenrad auf (nicht dargestellt), einen daran angrenzenden Lagerbereich 6 zur Lagerung der Welle 2 und einen daran angrenzenden zweiten Bereich 7 für einen Formschluss mit dem Zwischenbauteil 4. Benachbart zum zweiten Bereich 7 ist ein weiterer zylindrischer zentrierbereich 8, auf welchem in montiertem Zustand das Nabenbauteil 3 angeordnet ist.

Um möglichst hohe Drehmomente über die Welle übertragen zu können, ist die Welle aus Metall hergestellt. Das Zwischenbauteil 4 ist ebenfalls aus Metall hergestellt und das Nabenbauteil 3 ist aus Kunststoff gefertigt.

In Figur 3 ist das Zwischenbauteil 4 näher dargestellt. Wie in Figur 3 gezeigt, ist das Zwischenbauteil 4 als Mitnehmerscheibe ausgebildet und umfasst eine Platte 10, in welchem eine durchgängige Sechskantöffnung 9 mittig angeordnet ist. Weiter sind am Zwischenbauteil 4 vier Zapfen 11 vorgesehen, welche zur Verbindung mit dem Nabenbauteil 3 dienen.

Wie aus Figur 4 ersichtlich ist, ist das Nabenbauteil 3 ein Planetenrad. Das Planetenrad weist eine mittige Durchgangsbohrung 13 sowie eine an seinem Umfang angeordnete Verzahnung 14 auf. Aus Vereinfachungsgründen ist in Figur 3 die Verzahnung 14 nicht im Detail dargestellt. Weiterhin ist an einer Seite des Planetenrades eine ringförmige Ausnehmung 12 vorgesehen, sodass sich ein Flanschbereich 15 um die Durchgangsbohrung 13 ergibt. In Figur 4 ist ein Zustand dargestellt, in dem das Zwischenbauteil 4 schon am Planetenrad 3 unlösbar befestigt ist. Wie in Figur 4 gezeigt, sind die Zapfen 11 des Zwischenbauteils 4 am äußeren Bereich des Flanschbereichs 15 angeordnet und mit diesem mittels Ultraschallschweißen unlösbar zusammengeschweißt. Dadurch sind das Planetenrad und das Zwischenbauteil 4 unlösbar, d.h. nicht zerstörungsfrei lösbar, miteinander verbunden. Dadurch kann beim Verschweißen der an der Spitze der Zapfen 11 schmelzende Kunststoff des Planetenrades problemlos nach außen in die Ausnehmung abfließen.

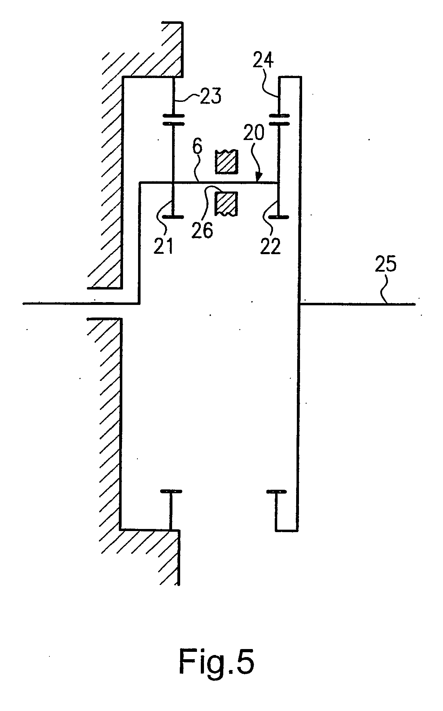

Der oben beschriebene Planetenradsatz wird in einem, wie in Figur 5 gezeigten, Planetengetriebe verwendet, bei dem der Planetenradträger 20 angetrieben wird. Auf der einen Seite des Trägers kämmen die Planetenräder 21 mit einem stehenden Hohlrad 23 und auf der anderen Seite kämmen die Planetenräder 22 mit einem glockenartigen Bauteil 24 (Abtriebshohlrad), das mit einer Abtriebswelle 25 verbunden ist. Durch unterschiedliche Zähnezahl von Planetenrädern und Hohlrädern lassen sich dabei sehr große Untersetzungen erzielen. Der Planetenradträger ist dabei zwischen den beiden Planetenrädern 21 und 22 an einem Lager 26 gelagert.

Diese Bauweise ermöglicht es, hohe Drehmomente über die Welle 2 von dem einen auf das andere Planetenrad zu übertragen. Auf Grund dieser hohen Drehmomente können keine reibschlüssigen Welle-Nabe-Verbindungen für die Zahnräder aus Kunststoff verwendet werden. Ebenfalls sind stoffschlüssige Verbindungen nicht möglich, da die Welle 2 wegen der notwendigen hohen Steifigkeit und auf Grund der Belastungen bei der Lagerung aus Metall hergestellt werden muss. Die Zahnräder werden auf Grund geringerer Kosten und minimalen Geräuschen im Betrieb aus Kunststoff gefertigt.

Abhängig von den Zähnezahlzusammenstellungen können die Planetenräder auf den verschiedenen Wellen unterschiedliche Stellungen zueinander einnehmen. D.h., dass die beiden auf der Welle 2 angeordneten Planetenräder jeweils in bestimmten Winkeln zur Welle angeordnet werden müssen.

Erfindungsgemäß wird zuerst die endgültige Lage der einzelnen Zahnräder des Planetengetriebes zueinander ausgerichtet und anschließend eine unlösbare Verbindung zwischen dem Zwischenbauteil 4 und dem Planetenrad 3 erzeugt. Somit kann auch ein doppelter Planetensatz, bei dem die verschiedenen Zahnräder einer Seite beim Einbau unterschiedlichen Winkel zu den auf der gleichen Welle angeordneten Zahnrädern einnehmen müssen, einfach und schnell gefertigt werden. Weiterhin müssen nicht unterschiedliche Zahnräder für den Zusammenbau sortiert werden. Somit dient die Welle 2 nur noch zur Zentrierung des Planetenrades 3 auf der Welle und die eigentliche Befestigung des Planetenrades 3 auf der Welle erfolgt über das Zwischenbauteil 4.

Es sei angemerkt, dass der Zentrierbereich 8 der Welle 2, auf welchem das zweite Planetenrad 3 positioniert wird, auch eine Rändelung o.ä. aufweisen kann, um beispielsweise eine Abrutschsicherung bereitzustellen und auch ein zusätzliches Verschweißen des Planetenrads unmittelbar auf der Welle 2 zu erreichen, wodurch eine Steigerung des übertragbaren Drehmoments wie auch ein Toleranzausgleich zwischen Welle 2 und Planetenrad 3, erhalten werden kann.

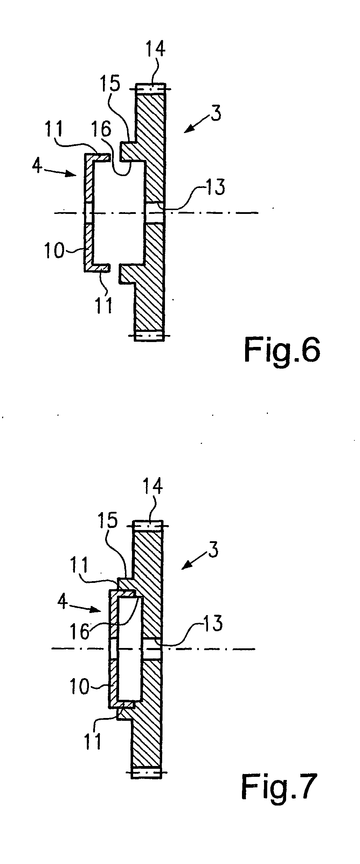

Nachfolgend wird unter Bezugnahme auf die Figuren 5 und 6 eine Welle-Nabe-Verbindung gemäß einem zweiten Ausführungsbeispiel der vorliegenden Erfindung beschrieben.

Gleiche bzw. funktional gleiche Teile sind mit den gleichen Bezugszeichen wie im ersten Ausführungsbeispiel bezeichnet.

Wie in Figur 6 gezeigt, ist das Planetenrad 3 ähnlich zu dem des ersten Ausführungsbeispiels ausgebildet. Im Unterschied zum ersten Ausführungsbeispiel weist das Planetenrad 3 jedoch eine zusätzliche innere Ausnehmung 16 auf, welche unmittelbar benachbart zur Durchgangsöffnung 13 des Planetenrades gebildet ist. Dadurch ergibt sich ein ringförmiger Flansch 15 mit einer relativ geringen Stegbreite und relativ großem Innendurchmesser.

Wie insbesondere aus Figur 6 ersichtlich ist, ist die Mitnehmerscheibe 4 derart ausgebildet, dass ihre Zapfen 11 ungefähr auf Höhe des Wandbereichs der Ausnehmung 16 angeordnet sind. Dadurch wird es möglich, dass die beim Aufschweißen auftretende Kunststoffschmelze des Planetenrads 3 in diesem Ausführungsbeispiel nach innen fließt und somit nach dem unlösbaren Aufschweißen der Mitnehmerscheibe 4 auf das Planetenrad 3 von außen nicht mehr sichtbar ist. Dadurch kann insbesondere verhindert werden, dass beispielsweise flüssiger Kunststoff unbeabsichtigt während des Aufschweißens in den Zahnradbereich des Planetenrades 3 fließen kann. Ansonsten entspricht dieses Ausführungsbeispiel dem ersten Ausführungsbeispiel, sodass auf die dort gegebene Beschreibung verwiesen werden kann.

Zusammenfassend betrifft die vorliegende Erfindung eine Welle-Nabe-Verbindung 1 mit einer Metallwelle 2, einer Kunststoffnabe 3 und einem Zwischenbauteil 4. Das Zwischenbauteil ist zwischen der Welle 2 und der Nabe 3 angeordnet, um die Welle 2 mit der Nabe 3 zu verbinden. Weiter ist das Zwischenbauteil 4 mit der Welle 2 formschlüssig verbunden und mit der Nabe 3 unlösbar verbunden. Daher wird die unlösbare Verbindung zwischen der Nabe 3 und dem Zwischenbauteil 4 erst dann erzeugt, wenn das Zwischenbauteil 4 mit der Welle 2 formschlüssig verbunden ist, sodass eine Ausrichtmöglichkeit für die Nabe 3 vor dem abschließenden unlösbaren Verbinden mit dem Zwischenbauteil 4 gegeben ist.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung wie durch die nachfolgenden Ansprüche definiert sind verschiedene Änderungen und Modifikationen möglich, ohne den Umfang der Erfindung sowie ihre Äquivalente zu verlassen.

## Patentansprüche

1. **Verfahren zur Herstellung einer** Welle-Nabe-Verbindung, umfassend eine aus Metall hergestellte Welle (2), ein aus Kunststoff hergestelltes Nabenbauteil (3) und ein Zwischenbauteil (4), welches zwischen der Welle (2) und dem Nabenbauteil (3) angeordnet **wird,** um die Welle (2) mit dem Nabenbauteil (3) formschlüssig zu verbinden, wobei zwischen dem Nabenbauteil (3) und dem Zwischenbauteil (4) eine unlösbare Verbindung ausgebildet **wird,** wobei die unlösbare Verbindung zwischen dem Nabenbauteil (3) und dem Zwischenbauteil (4) erst dann erzeugt wird, wenn das Zwischenbauteil (4) mit der Welle (2) formschlüssig verbunden ist.

2. **Verfahren** nach Anspruch 1, **dadurch gekennzeichnet, dass** das Zwischenbauteil aus Metall oder aus Kunststoff hergestellt ist.

3. **Verfahren** nach Anspruch 1 oder 2, **dadurch gekennzeichnet, dass** das Zwischenbauteil (4) mit dem Nabenbauteil (3) mittels eines Schweißverfahrens unlösbar verbunden ist.

4. **Verfahren** nach Anspruch 3, **dadurch gekennzeichnet, dass** das Schweißverfahren ein Ultraschallschweißen ist.

5. **Verfahren zum Herstellen eines Planetengetriebes mittels einem Verfahren zur Herstellung einer** Welle-, Nabe-Verbindung nach einem der Ansprüche 1 bis 4, **dadurch gekennzeichnet, dass** das Planetengetriebe mit einem doppelten Planetenradsatz **ausgebildet** wird wobei die Welle (2) einen ersten Bereich (5) für eine Formschluss mit einem ersten Planetenrad, einen Lagerbereich (6) zur Lagerung der Welle, einen zweiten Bereich (7) für einen Formschluss mit dem Zwischenbauteil (4) und einen Zentrierbereich (8) zur Zentrierung eines zweiten Planetenrads aufweist.

6. **Verfahren** nach Anspruch 5, **dadurch gekennzeichnet, dass** das Planetenrad (3) im montierten Zustand auf dem Zentrierbereich (8) aufliegt, der Zentrierbereich (8) eine rauhe Oberfläche, insbesondere eine gerändelte Oberfläche, aufweist und zwischen dem Zentrierbereich (8) der Welle (2) und dem Planetenrad (3) eine Passung, insbesondere eine Übergangspassung, ausgebildet ist.

7. **Verfahren** nach einem der Ansprüche 1 bis 6, **dadurch gekennzeichnet, dass** das Zwischenbauteil (4) eine vorstehende Bereiche (11) umfassende Mitnehmerscheibe ist

8. **Verfahren** nach Anspruch 7, **dadurch gekenntzeichnet, dass** die vorstehenden Bereiche (11) der Mitnehmerscheibe im montierten Zustand innerhalb oder außerhalb eines Flanschbereichs (15) des Nabenbauteils (3) angeordnet sind.

9. **Verfahren** nach einem der Ansprüche 1 bis 8, **dadurch gekennzeichnet, dass** der Formschluss zwischen der Welle (2) und dem Zwischenbauteil (4) als Vieleck, insbesondere als Sechseck ausgebildet ist.

10. Verfahren zur Montage eines Planetengetriebes, insbesondere mit einem doppelten Planetenradsatz, umfassend die Schritte:
formschlüssiges Verbinden eines Zwischenbauteils (4) mit einer Welle (2),
loses Montieren eines Planetenrades (3) auf die Welle (2), benachbart zum Zwischenbauteil (4),
Ausrichten des Planetenrades (3) mit anderen Bauteilen des Planetengetriebes, insbesondere einem Hohlrad und einem Sonnenrad, und
unlösbares Verbinden des Zwischenbauteils (4) mit dem ausgerichteten Planetenrad (3).

11. Verfahren nach Anspruch 10, **dadurch gekennzeichnet, dass** das Zwischenbauteil (4) als Mitnehmerscheibe mit mehreren vorstehenden Bereichen (11) ausgebildet ist, wobei die vorstehenden Bereiche (11) unlösbar in das Planetenrad (3) eingeschweißt werden.

12. Verfahren nach Anspruch 10 oder 11, **dadurch gekennzeichnet, dass** das zu Planetenrad (3) mit der Wette (2) an seinem inneren Umfang verschweißt wird.

## Claims

1. Method for producing a shaft/hub connection, comprising a shaft (2) produced from metal, a hub component (3) produced from plastic and an intermediate component (4) which is arranged between the shaft (2) and the hub component (3), in order to connect the shaft (2) positively to the hub component (3), an unreleasable connection being formed between the hub component (3) and the intermediate component (4), the unreleasable connection between the hub component (3) and the intermediate component (4) being made only when the intermediate component (4) is connected positively to the shaft (2).

2. Method according to Claim 1, **characterized in that** the intermediate component is produced from metal or from plastic.

3. Method according to Claim 1 or 2, **characterized in that** the intermediate component (4) is connected unreleasably to the hub component (3) by means of a welding method.

4. Method according to Claim 3, **characterized in that** the welding method is ultrasonic welding.

5. Method for producing an epicyclic gear by means of a method for producing a shaft/hub connection according to one of Claims 1 to 4, **characterized in that** the epicyclic gear is formed with a double planet-wheel set, the shaft (2) having a first region (5) for positive connection to a first planet wheel, a bearing region (6) for mounting the shaft, a second region (7) for positive connection to the intermediate component (4) and a centring region (8) for centring a second planet wheel.

6. Method according to Claim 5, **characterized in that** the planet wheel (3), in the mounted state, lies on the centring region (8), the centring region (8) has a rough surface, in particular a knurled surface, and a fit, in particular a transition fit, is formed between the centring region (8) of the shaft (2) and the planet wheel (3).

7. Method according to one of Claims 1 to 6, **characterized in that** the intermediate component (4) is a driving disc comprising projecting regions (11).

8. Method according to Claim 7, **characterized in that**, in the mounted state, the projecting regions (11) of the driving disc are arranged inside or outside a flange region (15) of the hub component (3).

9. Method according to one of Claims 1 to 8, **characterized in that** the positive connection between the shaft (2) and the intermediate component (4) is designed as a polygon, in particular as a hexagon.

10. Method for mounting an epicyclic gear, in particular with a double planet-wheel set, comprising the steps:
- positive connection of an intermediate component (4) to a shaft (2),
- loose mounting of a planet wheel (3) onto the shaft (2) adjacently to the intermediate component (4).
- alignment of the planet wheel (3) with other components of the epicyclic gear, in particular with a ring wheel and with a sun wheel, and
- unreleasable connection of the intermediate component (4) to the aligned planet wheel (3).

11. Method according to Claim 10, **characterized in that** the intermediate component (4) is designed as a driving disc with a plurality of projecting regions (11), the projecting regions (11) being welded unreleasably into the planet wheel (3).

12. Method according to Claim 10 or 11, **characterized in that** the planet wheel (3) is welded on its inner circumference to the shaft (2).

## Revendications

1. Procédé de fabrication d'une liaison arbre-moyeu, comprenant un arbre (2) en métal, un composant de moyeu (3) en plastique et un composant intermédiaire (4), qui est disposé entre l'arbre (2) et le composant de moyeu (3), afin de connecter par engagement par correspondance géométrique l'arbre (2) au composant de moyeu (3), une connexion permanente étant réalisée entre le composant de moyeu (3) et le composant intermédiaire (4), la connexion permanente entre le composant de moyeu (3) et le composant intermédiaire (4) étant seulement créée une fois que le composant intermédiaire (4) a été connecté par engagement par correspondance géométrique avec l'arbre (2).

2. Procédé selon la revendication 1, **caractérisé en ce que** le composant intermédiaire est en métal ou en plastique.

3. Procédé selon la revendication 1 ou 2, **caractérisé en ce que** le composant intermédiaire (4) est connecté de manière permanente au composant de moyeu (3) au moyen d'un procédé de soudage.

4. Procédé selon la revendication 3, **caractérisé en ce que** le procédé de soudage est un soudage aux ultrasons.

5. Procédé de fabrication d'un engrenage planétaire au moyen d'un procédé de fabrication d'une liaison arbre-moyeu selon l'une quelconque des revendications 1 à 4, **caractérisé en ce que** l'engrenage planétaire est réalisé avec un train planétaire double, l'arbre (2) présentant une première région (5) pour un engagement par correspondance géométrique avec un premier pignon planétaire, une région de palier (6) pour supporter l'arbre, une deuxième région (7) pour un engagement par correspondance géométrique avec le composant intermédiaire (4) et une région centrale (8) pour le centrage d'un deuxième pignon planétaire.

6. Procédé selon la revendication 5, **caractérisé en ce que** le pignon planétaire (3) repose dans l'état monté sur la région de centrage (8), la région de centrage (8) présente une surface rugueuse, notamment une surface moletée, et entre la région de centrage (8) de l'arbre (2) et le pignon planétaire (3), est réalisé un ajustement, notamment un ajustement de transition.

7. Procédé selon l'une quelconque des revendications 1 à 6, **caractérisé en ce que** le composant intermédiaire (4) est un disque d'entraînement comprenant des régions saillantes (11).

8. Procédé selon la revendication 7, **caractérisé en ce que** les régions saillantes (11) du disque d'entraînement sont disposées dans l'état monté à l'intérieur ou à l'extérieur d'une région de bride (15) du composant de moyeu (3).

9. Procédé selon l'une quelconque des revendications 1 à 8, **caractérisé en ce que** l'engagement par correspondance géométrique entre l'arbre (2) et le composant intermédiaire (4) est réalisé sous forme de polygone, en particulier sous forme d'hexagone.

10. Procédé de montage d'un engrenage planétaire, en particulier avec un double train planétaire, comprenant les étapes suivantes :
- connexion par engagement par correspondance géométrique d'un composant intermédiaire (4) à un arbre (2),
- montage lâche d'un pignon planétaire (3) sur l'arbre (2), à côté du composant intermédiaire (4),
- alignement du pignon planétaire (3) avec d'autres composants de l'engrenage planétaire, en particulier une couronne et une roue solaire, et
- connexion permanente du composant intermédiaire (4) au pignon planétaire aligné (3).

11. Procédé selon la revendication 10, **caractérisé en ce que** le composant intermédiaire (4) est réalisé sous forme de disque d'entraînement avec plusieurs régions saillantes (11), les régions saillantes (11) étant soudées de manière permanente dans le pignon planétaire (3).

12. Procédé selon la revendication 10 ou 11, **caractérisé en ce que** le pignon planétaire (3) est soudé à l'arbre (2) sur sa périphérie interne.
